# EUROPEAN PATENT SPECIFICATION

(11) **EP 0 280 019 B1**
(45) Date of publication and mention of the grant of the patent: **23.03.1994**
(21) Application number: 88100513.6
(22) Date of filing: 15.01.1988
(51) Int. Cl.: G06F 12/12

(54) **Method of controlling a computer to transfer blocks of data between bulk storage means and a memory**
Verfahren zur Steuerung eines Computers zur Übertragung von Datenblöcken zwischen einem Massenspeicher und einem Speicher
Procédé de commande d'un ordinateur pour transférer des blocs de données entre une mémoire de masse et une mémoire

(30) Priority: 25.02.1987 US 19916
(43) Date of publication of application: 31.08.1988
(73) Proprietor: International Business Machines Corporation, Armonk, N.Y. 10504 (US)
(72) Inventor: Brenner, Larry Bert, Stone Ridge New York 12484 (US); Vanleer, Paul Wilbert, Highland New York 12528 (US)
(74) Representative: Burt, Roger James, Dr.

(56) References cited:
- OPERATING SYSTEMS REVIEW, vol. 8, no. 1, January 1974, pages 8-17, ACM, New York, US; M.H. FOGEL: "The VMOS paging algorithm, a practical implementation of the working set model"
- IEEE TRANSACTIONS ON COMPUTERS, vol. C-25, no. 9, September 1976, pages 907-914; A.J. SMITH: "A modified working set paging algorithm"

## Description

The present invention relates to a method of controlling a computer for the transfer of blocks of data between bulk storage means, such as a direct access storage device (DASD) and a main memory system.

In large mainframe control programs, particularly such programs in which multiple computing entities or tasks may be created and run simultaneously, memory management is a necessary function. The real memory of even a large mainframe computer system may be insufficient to service every task running on the system at a particular time. Accordingly, control programs for such mainframes employ an expedient known as "paging".

In paging, memory is managed in units of fixed size, called pages, typically 4 kilobytes. Only "active" pages are permitted to remain in memory for utilisation by the processor as it executes its tasks on the computer system. Those pages which, according to given criteria, are not frequently referenced, or which have not been referenced for some predetermined amount of time, are transferred to storage, thus freeing up that area of memory for a page of data needed for a task demanding execution by the processor.

The computer keeps a record of where in storage the page transferred thereto actually resides, so that if that page is required for a task subsequently demanding execution it can be retrieved from storage and placed back in memory for use in the execution of that task.

The prior art has approached the implementation of paging in two ways. One is the Local Least Recently Used ("LLRU") approach with swapping. This involves determining which pages of an individual user have been referenced in a given immediately preceding period of computer resource allocation to a given user, or time slice, and grouping these "old" pages into "swap sets" for subsequent transfer to storage. Pages which have not been referenced in the given immediately preceding period or time slice are paged individually. Swap sets are transferred back to memory when any one page therein is demanded. The idea is that since they were all referenced previously in a given time slice, there is a good likelihood they will be needed together again. And, transferring pages in groups, or sets, is more efficient than transferring pages individually.

The other approach is the Global Least Recently Used ("GLRU") approach. This involves determining which pages in memory have been recently referenced on a system-wide basis, without regard to user or time slice considerations.

The GLRU approach has the advantage of simplicity. That is, it does not concern itself with considerations such as what the owning user is, and what its state is. Similarly, it optimises use of the memory for the system as a whole, by not basing its decisions on user dependent considerations. Also, since it is demand driven, that is, the time it spends looking for unreferenced pages to make room for new pages is dependent upon the actual demand for page frames, it adds overhead in proportion to its need by the system. Likewise, the rate at which pages in memory are checked to determine whether they have been re-referenced (and thus should be retained) automatically increases as a function of demand.

However, GLRU inherently selects its pages one at a time, so the benefits of physical swapping are not provided. That is, pages are not grouped together for removal from and subsequent return to memory in some kind of efficiency-oriented scheme, such as relation by user, and likelihood of use together.

The local LRU approach easily provides the benefits of swapping, because the system looks at one user at a time, resulting in user dependent organisation of the pages in swap sets. However some parts of the local LRU approach are not "demand driven". That is, it provides relatively fixed overhead in its planning for the formation of swap sets, whether or not the frames represented by the swap sets are actually required, i.e., whether the pages resident in those frames must be transferred to storage to make room for a page which needs to be placed in memory. Further, the interval over which the reference decision is made is not tied to system demand nor recognition of program behaviour that would influence the required time.

Thus there is need for an improved method of paging to provide a more efficient system that minimises the overhead requirements imposed by such a system.

According to the invention, there is provided a method of controlling a computer system having a memory, bulk storage means, a processor and a control system for controlling the execution of tasks on behalf of a plurality of system computing entities, said method comprising the step of transferring blocks of data between said bulk storage means and said memory to maintain blocks of data required for current computer system operations in said memory, and the step of: identifying blocks of data in said memory that have not been referenced within a predetermined preceding time period, on a system-wide basis; characterised by the steps of grouping into sets related to said entities, those blocks of data from said identified blocks, which have been referenced by a respective one of said entities since being last written into memory; and transferring said sets of blocks to said bulk storage for later retrieval as a set when any one of said blocks in said set is required in said memory for use by the computer system.

An embodiment of the invention will now be described, by way of example, with reference to the accompanying drawings, in which:
Fig. 1 is a table illustrating decisions in accordance with the prior art Local Least Recently Used paging mechanism.
Fig. 2 is a block diagram illustrating the disposition of pages selected for paging from memory, in accordance with the prior art Local Least Recently Used mechanism.
Fig. 3 is a flow chart illustrating the preferred embodiment of the present invention.

The preferred embodiment is most easily understood against the background of a more detailed description of the prior art paging mechanisms referred to above. Accordingly, there now follows such a background description of those paging mechanisms.

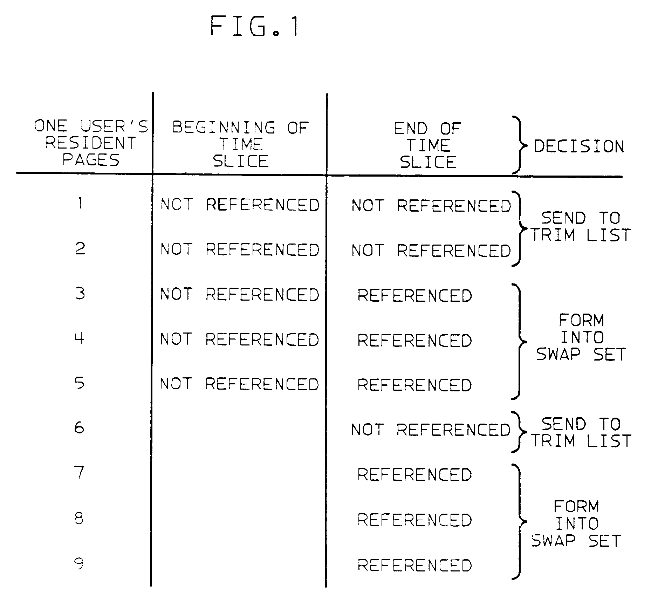

Fig. 1 is a table that illustrates the paging decision mechanism for LLRU. The operating system uses these decisions to move pages from memory that are inactive, in order to allocate space in memory. The mechanism works by examining the references of pages, one computing entity (such as a user) at a time. At the beginning of an allocation period of computer resource, or timeslice, all of one user's resident pages are flagged as not presently referenced, so that over time it can be discovered which pages remain unreferenced and which ones are actually actively in use during that timeslice, i.e., are recently referenced.

Column 1 of Fig. 1 identifies each of nine pages of an individual user. Pages 1-5 are resident at the beginning of a timeslice, while pages 6-9 are fetched some time after the beginning of this timeslice, but before the end of the timeslice. Column 2 shows the status of Pages 1-5 at the beginning of the timeslice. As shown, each has been flagged as not referenced, as mentioned above. Column 3 shows the status of pages 1-9 at the end of the timeslice, and the decision made with respect to those pages in accordance with LLRU. Pages 1 and 2 were not referenced during the timeslice. They are sent to the Trim List, and then immediately, to the Flush List, an intermediate step on the way to being paged out individually to DASD. This is described in more detail below.

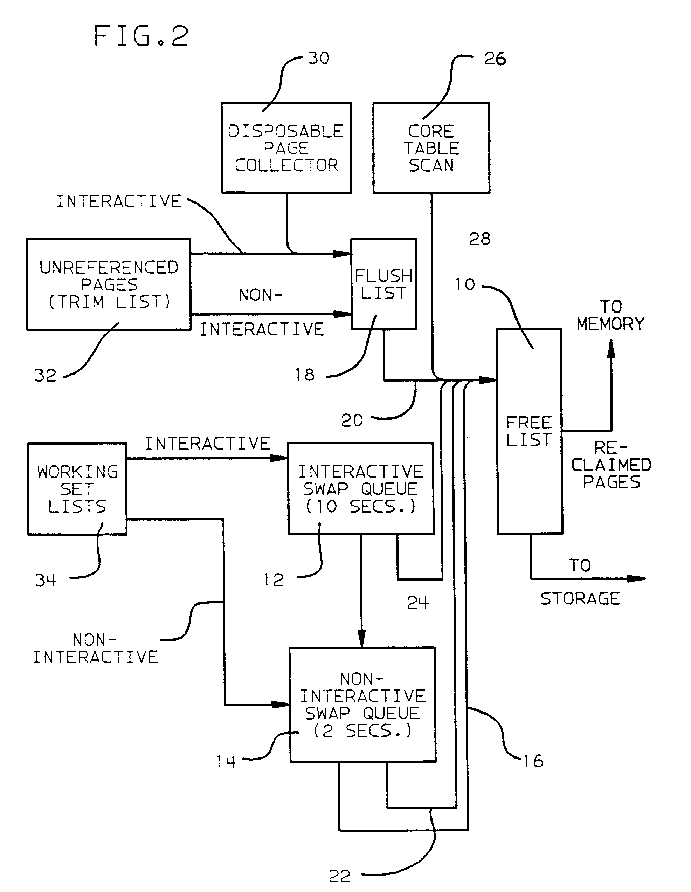

Those pages which are flagged as having been referenced at the end of the timeslice, in this case pages 3. 4, 5, 7, 8 and 9, are placed on the "working set" list which is then placed immediately on one of two Swap Queues (Interactive or Non-Interactive). Pages on the Swap Queues tend to remain in memory longer than those pages on the Flush List. The mechanism by which this occurs is described below in connection with Fig.2. The difference in resident time reflects the facts that statistically, pages used recently are most likely to continue to be used.

Note that a page may be brought into memory during a timeslice, yet not be referenced during that timeslice; the page may have been brought in as part of a swap set as the result of another page in that swap set being referenced. Thus, one or more of the pages in the swap set "brought along for the ride" may not be referenced during the timeslice.

Fig. 2 is a block diagram showing the paths of pages selected in accordance with the decision process described above in connection with Fig. 1. In all cases, pages made available for use in memory are selected from the free list 10. The replenishment of the free list is done from several sources, in a specific order. the first choice pages for replenishment of the free list are pages selected from the Swap Queues 12, 14, that have been there for an elapsed time longer than a given installation-settable time limit. In this example, a time limit of 10 seconds has been set for the Interactive Swap Queue 12, and two seconds has been selected for the Non-Interactive Swap Queue 14. Pages on the Interactive Swap Queue 12 that reside there for longer than 10 seconds are automatically transferred to the Non-Interactive Swap Queue 14. Thus, the first choice pages actually come from the Non-Interactive Swap Queue. This first choice source is depicted by line 16. The swap queues 12, 14 are supplied from Working Set lists 34 associated with individual users, as is known.

By way of background, users are classified as "interactive" or "non-interactive" by the system scheduler, by known techniques. Interactive users are typically machines rum by human operators who are actually sitting at a terminal and expecting a system response fairly promptly. A non-interactive user is a machine running a task known to take relatively long, and so prompt system responsiveness is not as important a system characteristic as for an interactive user.

It will be appreciated that by establishing separate queues for the interactive and non-interactive users, as is the case with Queues 12 and 14 in Fig. 2, and setting up resident time limits as described, the referenced pages selected for swap set formation of the interactive user will remain resident in memory longer than those of the non-interactive users. This tends to improve the service time of the interactive user by minimising the likelihood that pages they are using will be swapped out to DASD when they are operating at the keyboard at a "normal" rate.

The second choice pages for replenishing Free List 10 are those from the Flush List 18. This source of pages is made up principally of the unreferenced pages which were trimmed as described in connection with Fig. 1. These pages, too, are also categorised as to whether they were trimmed from an interactive versus a non-interactive user, by placing the interactive users' pages at the front end of Flush List 18 and those of the non-interactive users at the rear end of Flush List 18. This allows for a slight extra life time in memory for the unreferenced pages of the interactive users.

The third and fourth choice pages for Free List 10 replenishment are invoked only after Flush List 18 is empty. The third choice pages are the non-interactive swappable pages, selected in order of age, oldest first and newest last.

When the Non-Interactive Swap Queue 14 is empty, the fourth choice is invoked, which are the interactive swappable pages in Queue 12. These are also selected in order of age, oldest first and newest last. Again, the preference for holding the pages of interactive users in memory longer is implemented in the mechanism.

The fifth choice pages to replenish Free List 10 are those pages from the Core Table Scan 26. Occasionally, in an emergency-like situation, none of the prior described mechanisms produce enough pages to replenish Free List 10. In that case, any page that is "available" is selected to be placed on Free List 10. The primary thing that makes a page "unavailable" is that it is locked for an I/O operation. For example, such a page may have asynchronously moving data in or out of that page, and it cannot be taken out of memory until the I/O operation completes.

Finally, it is important to note that another source of pages for Flush List 18 is the Disposable Page Collector 30. Some pages simply don't come under any of the above described categories. Disposable Page Collector 30 is a mechanism that collects up any such pages which have been unreferenced following one minute or so. They are then placed on Flush List 18.

Further details and background may be found in IBM Virtual Machine/System Product High Performance Option, Release 4.2 manuals. See, e.g. IBM Virtual Machine/System Product High Performance Option, System Logic and Problem Determination Guide - CP, Release 4.2, Document Number LY20-0897-6, which is hereby incorporated herein by reference. See especially therein pages 135-138. See also, e.g., IBM Virtual Machine/System Product High Performance Option, System Programmer's Guide, Release 4.2, Document Number SC19-6224-6, which is hereby incorporated herein by reference. See especially Chapter 3 thereof. Both of these documents can be obtained from IBM Corporation, Mechanicsburg, Pennsylvania.

The above text describes the prior art local Least Recently Used mechanism, which uses swapping. The other prior art paging mechanism mentioned above is the Global Least Recently Used, which does not use swapping. GLRU is quite simple as compared with LLRU. The pages in memory are simply scanned by the core table scan mechanism, which notes which pages were referenced and which have not been referenced. As the scanner scans through all of the pages in memory sequentially and cyclically, every time a page it examines is marked as referenced, it stays resident. If the page is unreferenced it may be placed on the free list either immediately, of the information in that page already exists on an external storage device or, if not, e.g. because the page was modified while resident in memory, after it has been copies to external storage. When the mechanism detects that a page is referenced and is therefore going to stay resident, the mechanism resets the reference bit. Later, when the scan wraps around and gets back to that page, the determination is made again whether the page has been referenced since the last time it was scanned. If the page has been referenced, it is still active and is allowed to remain. However, if it remained unreferenced since the last scan, the it is eligible to be selected for free list replenishment.

One of the advantages of the GLRU mechanism is its simplicity. It does not distinguish between classes of user, or between user and system pages, and it does not require the installer to select time limits for queue residency durations, for example. The time limit for pages selected for placement on the free list is strictly a function of the load on the system. If no pages are needed for the free list because the load is light, the core table scan simply stops and there is no overhead for it. As the load increases, the rate at which the need for pages increases directly affects the rate of the core table scan, which makes those pages available for transfer to storage.

Thus, on the one hand, with GLRU, an efficient, demand-driven scheme is provided with little overhead involved in selecting pages for placement on the free list. As compared with LLRU, GLRU has relatively little overhead. GLRU has no overhead associated with such things as the bundling of pages onto the working set lists. Note that in LLRU this bundling and moving pages around occurs for many pages that are not ultimately placed on the free list, or even if they are, are reclaimed before they are made available for use by new users. Thus, a significant amount of overhead is wasted in LLRU as compared with GLRU. On the other hand, swapping provides a double benefit. One benefit is that the use of moveable head DASD storage devices is more efficient when, say, ten pages are moved in one operation instead of one. The major delays for seek time and access time in the device, and rotational delay until you get to the first page you need, are shared out across those ten pages. The second benefit is in CPU time. If the mechanism for the formation of swap sets is a good one, the bringing in of a swap set with, say ten pages, will cause a number of pages which actually need to be used together to be brought in in a single operation, saving the system the trouble of managing page faults in bringing in those other pages.

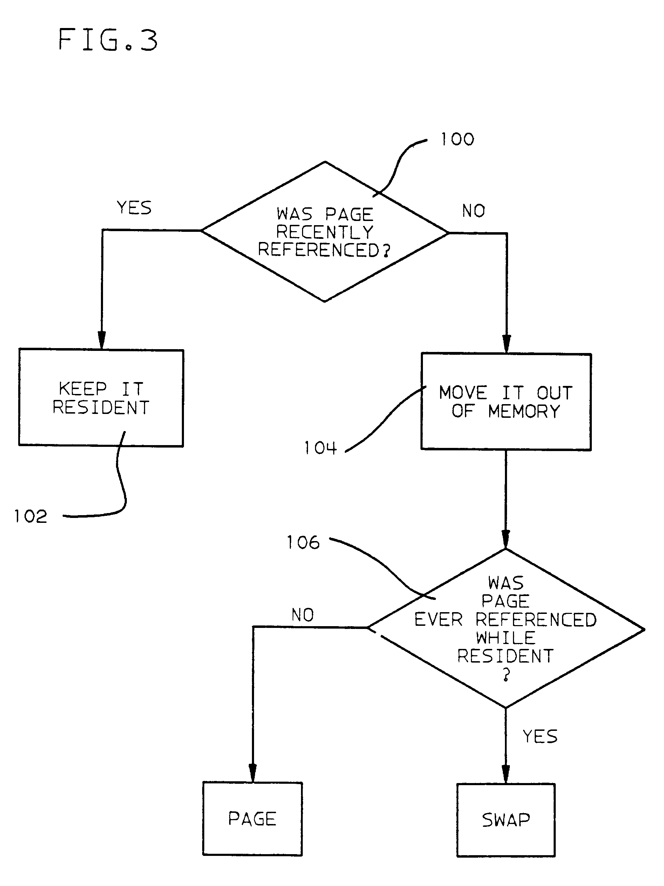

Fig. 3 is a flow chart of the preferred embodiment of the present invention. It will be noted that the preferred embodiment has much of the simplicity of the GLRU prior art mechanism. However, it also includes a swapping mechanism. This swapping mechanism, however, is unlike the prior art swapping mechanism.

The first decision block 100 is a determination made via the core table scan mechanism. In other words, it is not a decision that takes into consideration timeslices, transactions, or the like. The determination is made on the basis of whether the page was referenced since the last time the core table scan mechanism caused the page to be examined. If the page is marked as referenced, the system keeps the page and moves on. However, if the page is not so marked, the system moves the page out of memory. However, before doing so, the system makes the further inquiry 106 asking if the page was ever referenced while resident. Recall that some pages come into memory by way of the swapping mechanism not because they were specifically needed at a particular item, but because they were part of the set in which a needed page exists.

These "hitchhiker" pages may or may not be referenced after having been brought into memory. If such a page is found that has never been referenced, it is not eligible for swapping, and so is made available individually for paging by way of known paging mechanisms. The SET MINWS command can be used to override this decision and cause these "hitchhiker" pages to be included in the current swap sets. However, if the page was referenced while resident the page is placed on the user's working set list, reflecting the intention to collect a group of such pages to form a physical swap set.

Contrast this with the prior art LLRU, in which pages are placed on the user's working set list at the end of one time slice (q drop). The pages are subsequently, as required, gathered into sets according to virtual address, which may or may not be advantageous. According to the preferred embodiment, the gathering of pages into swap sets by way of the working set list, is largely temporal only, which is believed to gather pages more likely to be referenced together again.

Pages are placed on the owning user's working set list via known techniques. Note that significant advantages accrue from this implementation. Prior art mechanisms exist for creating and maintaining working set lists and for physically swapping these sets. For example, HPO includes such mechanisms. See the above referenced IBM documents for further details.

Note also that in the preferred embodiment of the present invention swapping decisions and referencing decisions are separate, while in the prior art LLRU with swapping mechanism, the decision was essentially the same. This results in significant improvements in the overhead consequences of paging, especially paging involving swapping. In the preferred embodiment, if pages are selected for swapping, the practical consequence is they are bundled up and swapped out to DASD almost immediately. As described above, with the LLRU with swapping, considerable overhead could be consumed in identifying pages for swapping, and placing them on a working set list, while those pages may ultimately never be swapped following the timeslice in which they were so processed, because pages in the set may be needed by the system relatively soon. This is virtually eliminated by the preferred embodiment of the present invention because the elapsed time for pages to be resident in a working set list is greatly reduced.

In addition, implementation of the preferred embodiment of the present invention, once the principles of the present invention are understood, is a fairly straight forward thing. This is because the component mechanisms of the embodiment are found in the prior art, such as the core table scan mechanism, the flush list, and the logical queues.

The pseudo code for the preferred embodiment is as follows:
For each page in real memory do;
if page not available for selection, skip it
if page has been recently-referenced, then do;
set page ever-referenced
set page recently-unreferenced;
skip this page (leave it resident);
end;
else (page not recently referenced) do;
(note - page is "selected" and is to be moved out of real memory)
if not ever-referenced then do;
(we will not use this page on a swap set)
if page changed, then (first write single page out, then freelist)
otherwise, put directly on freelist. if freelist replenished, exit.
end;
if ever-referenced then do;
if not a private user page, single page as above logically swap this page, which collects it on a list of other pages logically swapped for the same user.
if we now have a full swap set, or this is the last swappable page the user has, then do; physically swap one swap set to DASD;
if freelist replenished, exit;
end;
end;

## Claims

1. A method of controlling a computer system having a memory, bulk storage means, a processor and a control system for controlling the execution of tasks on behalf of a plurality of system computing entities, said method comprising the step of transferring blocks of data between said bulk storage means and said memory to maintain blocks of data required for current computer system operations in said memory, and the step of:
identifying blocks of data in said memory that have not been referenced within a predetermined preceding time period, on a system-wide basis; characterised by the steps of
grouping into sets related to said entities, those blocks of data front said identified blocks, which have been referenced by a respective one of said entities since being last written into memory; and
transferring said sets of blocks to said bulk storage for later retrieval as a set when any one of said blocks in said set is required in said memory for use by the computer system.

2. A method of controlling a computer system as claimed in Claim 1, wherein said predetermined time period varies according to system demand.

3. A method as claimed in Claim 1 or Claim 2 of controlling a computer system in which said memory is divided into a plurality of pages wherein each of said blocks of data comprises one page of data.

4. A method of controlling a computer system as claimed in any preceding claim wherein the step of identifying the blocks comprises:
examining pages of memory cyclicly by real address to identify those pages which have been referenced since the last time said pages were so examined; and the step of grouping the blocks comprises
placing selected ones of said identified pages of data, referenced by one of said entities since last being written into memory, onto a working set list associated with that entity,
the sets being transferred to storage for later retrieval when as many of said pages have been placed on said working set as make up a set.

## Patentansprüche

1. Ein Verfahren zur Steuerung eines Computersystems mit einem Hauptspeicher, einem Massenspeichermittel, einem Prozessor und einem Steuersystem zur Steuerung der Ausführung von Ausgaben für eine Mehrzahl an Systemberechnungsgrößen, wobei das genannte Verfahren den Schritt der Übertragung von Datenblöcken zwischen dem genannten Massenspeichermittel und dem genannten Hauptspeicher umfaßt, um Datenblöcke aufrechtzuerhalten, die für aktuelle Computersystemoperationen im genannten Hauptspeicher erforderlich sind, und des weiteren:
den Schritt zur Identifizierung von Datenblöcken im genannten Hauptspeicher, die nicht innerhalb eines vorbestimmten vorangegangenen Zeitabschnitts referenziert wurden und zwar über das gesamte System hinweg; charakterisiert durch die Schritte
der Gruppierung in auf die genannten Größen bezogene Sätze der Datenblöcke aus den genannten identifizierten Blöcken, die durch eine entsprechende der genannten Größen referenziert wurden, seit sie zuletzt in den Hauptspeicher geschrieben wurden; und
der Übertragung dieser Blocksätze in den genannten Massenspeicher zum späteren Hereinladen als einen Satz, wenn ein beliebiger der genannten Blöcke im genannten Satz im genannten Speicher für die Verwendung durch das Computersystem benötigt wird.

2. Ein Verfahren zur Steuerung eines Computersystems gemäß Anspruch 1, wobei der genannte vorbestimmte Zeitabschnitt je nach Systemanfrage variiert.

3. Ein Verfahren gemäß Anspruch 1 oder 2 zur Steuerung eines Computersystems, in dem der genannte Hauptspeicher in eine Mehrzahl an Seiten unterteilt ist, wobei jeder der genannten Datenblöcke eine Datenseite umfaßt.

4. Ein Verfahren zur Steuerung eines Computersystems gemäß allen vorangegangenen Ansprüchen, wobei der Schritt zur Identifikation der Blöcke folgendes umfaßt:
die zyklische Untersuchung von Speicherseiten nach realen Adressen, um diejenigen Seiten zu identifizieren, die seit der letzten Untersuchung dieser Seiten referenziert wurden; und der Schritt der Gruppierung der Blöcke umfaßt
das Setzen ausgewählter, identifizierter Datenseiten, die durch eine der genannten Größen referenziert wurden, seit sie zuletzt in den Hauptspeicher geschrieben wurden, in eine zu dieser Größe gehörende Arbeitssatzliste,
wobei die Sätze zum späteren Hereinladen in den Speicher übertragen werden, wenn soviele der genannten Seiten, um einen Satz zu bilden, in den genannten Arbeitssatz gesetzt wurden.

## Revendications

1. Procédé pour contrôler un système informatique comprenant une mémoire, une mémoire de masse, un processeur et un système de contrôle pour contrôler l'exécution des tâches pour le compte d'une pluralité d'entités de traitement du système, ledit procédé comprenant l'étape consistant à transférer des blocs de données entre ladite mémoire de masse et ladite mémoire pour conserver dans ladite mémoire les blocs de données nécessaires pour les opérations du système informatique en cours, et l'étape consistant à :
identifier les blocs de données dans ladite mémoire qui n'ont pas été référencés au cours d'une période de temps antérieure prédéterminée, à l'échelle du système; et les étapes consistant à :
regrouper en ensembles apparentés aux dites entités les blocs de données, parmi les dits blocs identifiés, qui ont été référencés par l'une de ces entités respectives depuis leur dernier chargement en mémoire; et
transférer les dits ensembles de blocs dans ladite mémoire de masse en vue de leur extraction ultérieure sous la forme d'un ensemble lorsque la présence dans ladite mémoire de l'un des dits blocs du dit ensemble est nécessaire en vue de son utilisation par le système informatique.

2. Procédé pour contrôler un système informatique selon la revendication 1, dans lequel ladite période de temps prédéterminée varie en fonction de la demande du système.

3. Procédé selon la revendication 1 ou 2 pour contrôler un système informatique, dans lequel ladite mémoire est divisée en plusieurs pages, chacun des dits blocs de données comprenant une page de données.

4. Procédé pour contrôler un système informatique selon l'une quelconque des revendications précédentes, dans lequel l'étape d'identification des blocs comprend l'étape consistant à :
examiner cycliquement les pages de la mémoire, par adresse réelle, pour identifier les pages qui ont été référencées depuis la dernière fois que les pages ont été ainsi examinées; et l'étape de groupement des blocs comprend l'étape consistant à :
placer des pages sélectionnées parmi les dites pages de données identifiées, référencées par l'une des dites entités depuis leur dernier chargement en mémoire, sur une liste d'ensembles de travail associée à cette entité, les ensembles étant transférés en mémoire en vue de leur extraction ultérieure lorsque le nombre de pages placées sur ledit ensemble de travail correspond au nombre de pages nécessaires pour former un ensemble.
